# EUROPÄISCHE PATENTANMELDUNG

(11) **EP 4 368 000 A1**
(43) Veröffentlichungstag der Anmeldung: **15.05.2024**
(21) Anmeldenummer: 23401041.1
(22) Anmeldetag: 24.10.2023
(51) Int. Cl.: A01C 7/20, A01C 5/06

(54) **LANDWIRTSCHAFTLICHE ARBEITSMASCHINE INSBESONDERE SÄ- UND BODENBEARBEITUNGSMASCHINE**

(30) Priorität: 09.11.2022 DE 102022129578
(71) Anmelder: Amazonen-Werke H. Dreyer SE & Co. KG, 49205 Hasbergen (DE)
(72) Erfinder: Johannaber, Stefan Jan, 49205 Hasbergen (DE); Wessels, Thomas, 49205 Hasbergen (DE); Breuer, Jan Henrik, 49205 Hasbergen (DE); Hansen, Nikolai, 49205 Hasbergen (DE)

(57) **Zusammenfassung**

Die Erfindung betrifft eine landwirtschaftliche Arbeitsmaschine (10), insbesondere Sä- und Bodenbearbeitungsmaschine, mit einer Rückverfestigungswalze (16), welche mehrere nebeneinander angeordnete Walzensegmente (18) umfasst, wobei mittels der Walzensegmente (18) verdichtete Bodenstreifen (S) derart erzeugbar sind, dass sich durch Erdverdrängung der Walzensegmente (18) zwischen benachbarten verdichteten Bodenstreifen (S) jeweils ein Erddamm (D) bildet, und einer Sensoranordnung (38), mittels welcher der Abstand (A1) zwischen einem ersten Referenzpunkt (RP1) und einem durch ein Walzensegment (18) erzeugten verdichteten Bodenstreifen (S) ermittelbar ist.

## Beschreibung

Die Erfindung betrifft eine landwirtschaftliche Arbeitsmaschine nach dem Oberbegriff des Patentanspruchs 1 und ein Verfahren zum Bearbeiten einer landschaftlichen Nutzfläche nach dem Oberbegriff des Patentanspruches 13.

Bei der Verwendung von Arbeitsmaschinen mit einer Rückverfestigungswalze, beispielsweise bei Sämaschinen mit einem vorlaufenden Reifenpacker, kann es vorkommen, dass zwischen den Walzensegmenten Erde hochquillt und es so zu einer Erddammbildung zwischen den verdichteten Bodenstreifen kommt. Bei sich verändernden Bodenverhältnissen kann die Erdmenge und die Höhe des sich bildenden Erddamms variieren.

Die durch die Rückverfestigungswalze erzeugten Erddämme werden im Nachgang, beispielsweise nach der Ablage von Saatgut, durch Umverteilung des Erdmaterials der Erddämme wieder aufgelöst. Durch die Umverteilung des Erdmaterials der Erddämme wird die Ablagetiefe des Saatguts beziehungsweise deren Erdbedeckungshöhe beeinflusst. Die von der Erddammbildung abhängige Beeinflussung der Ablagetiefe wird bei der Tiefenführung der Furchenöffner bisher nicht berücksichtigt und führt zu einer unbeabsichtigten Verfälschung der Ablagetiefe.

Die Druckschrift EP 3 668 302 B1 beschreibt ein System zur Kontrolle der durch Fahrwerksräder einer landwirtschaftlichen Arbeitsmaschine verursachten Bodenverdichtung, welches die korrekte Einstellung von Radspurlockerern erlaubt. Aus der Druckschrift EP 3 704 926 A1 ist eine sensorische Ablagetiefenerfassung bekannt, bei welcher mehrere in Fahrtrichtung hintereinander angeordnete Sensoren an einer Reiheneinheit eingesetzt werden. Die Erddammbildung durch die Verwendung von segmentierten Ackerwalzen ist aus der Druckschrift DE 35 33 820 A1 bekannt.

Landwirtschaftlichen Arbeitsmaschinen, welche die durch die Umverteilung des Erdmaterials der Erddämme verursachte Ablagetiefenverfälschung erfassen und/oder ausgleichen können, sind im Stand der Technik bisher nicht bekannt.

Die der Erfindung zugrundeliegende Aufgabe besteht also darin, die Arbeitsergebnisse bei der Verwendung von landwirtschaftlichen Arbeitsmaschinen mit einer Rückverfestigungswalze zu verbessern.

Die Aufgabe wird gelöst durch eine landwirtschaftliche Arbeitsmaschine der eingangs genannten Art, wobei mittels der Sensoranordnung der erfindungsgemäßen landwirtschaftlichen Arbeitsmaschine der Abstand zwischen einem zweiten Referenzpunkt und einem durch benachbarte Walzensegmente erzeugten Erddamm zwischen benachbarten verdichteten Bodenstreifen ermittelt wird.

Die Sensoranordnung der landwirtschaftlichen Arbeitsmaschine ermittelt also zwei Abstände, nämlich einen Abstand zu einem verdichteten Bodenstreifen und einen Abstand zu einem Erddamm zwischen zwei verdichteten Bodenstreifen. Auf Grundlage der Abstandsermittlung können dann die Einflüsse der sich gebildeten Erddämme auf das Arbeitsergebnis bestimmt werden, sodass beispielweise die durch die Umverteilung des Erdmaterials der Erddämme verursachte Beeinflussung der Ablagetiefe von Saatgut und/oder der Saatgut-Erdbedeckungshöhe beim Bearbeitungsvorgang berücksichtigt werden kann.

Die Arbeitsmaschine ist vorzugsweise eine Sä- und Bodenbearbeitungsmaschine. Die Rückverfestigungswalze kann beispielsweise eine Packerwalze sein. Die Walzensegmente können Packerräder der Packerwalze sein. Die Walzensegmente sind vorzugsweise in Querrichtung beabstandet voneinander angeordnet. Alternativ können die Walzensegmente auch unmittelbar aneinander angeordnet sein, wobei die Walzensegmentform im Aufstandsbereich eine Erddammbildung erlaubt. Beispielsweise können die Segmentflanken der Walzensegmente abfallend oder abgerundet ausgebildet sein.

In einer bevorzugten Ausbildungsform der erfindungsgemäßen landwirtschaftlichen Arbeitsmaschine befindet sich der erste Referenzpunkt in Fahrtrichtung hinter einem Walzensegment. Vorzugsweise befindet sich der erste Referenzpunkt in der Fahrspur eines Walzensegments. Alternativ oder zusätzlich befindet sich der zweite Referenzpunkt zwischen zwei benachbarten Walzensegmenten. Vorzugsweise befindet sich der zweite Referenzpunkt auf Höhe der benachbarten Walzensegmente oder zwischen den Fahrspuren der benachbarten Walzensegmente.

In einer Weiterbildung der erfindungsgemäßen landwirtschaftlichen Arbeitsmaschine weist die Sensoranordnung zumindest einen ersten Sensor auf, welcher dazu eingerichtet ist, den Abstand zwischen dem ersten Referenzpunkt und dem durch das Walzensegment erzeugten verdichteten Bodenstreifen zu ermitteln. Alternativ oder zusätzlich kann die Sensoranordnung zumindest einen zweiten Sensor aufweisen, welcher dazu eingerichtet ist, den Abstand zwischen dem zweiten Referenzpunkt und dem durch benachbarte Walzensegmente erzeugten Erddamm zwischen benachbarten verdichteten Bodenstreifen zu ermitteln. Der erste Sensor ermittelt vorzugsweise den Höhenabstand zwischen dem ersten Referenzpunkt und dem durch das Walzensegment erzeugten verdichteten Bodenstreifen. Der zweite Sensor ermittelt vorzugsweise den Höhenabstand zwischen dem zweiten Referenzpunkt und dem durch die benachbarten Walzensegmente erzeugten Erddamm. Die Position des ersten Sensors entspricht vorzugsweise im Wesentlichen der Position des ersten Referenzpunkts. Die Position des zweiten Sensors entspricht vorzugsweise im Wesentlichen der Position des zweiten Referenzpunkts.

Es ist darüber hinaus eine erfindungsgemäße landwirtschaftliche Arbeitsmaschine bevorzugt, bei welcher der erste Sensor und/oder der zweite Sensor jeweils als berührungslos arbeitender Abstandssensor ausgebildet ist. Vorzugsweise ist der erste Sensor dazu eingerichtet, den Abstand des ersten Sensors zu dem verdichteten Bodenstreifen auf Basis einer Laufzeitmessung zu ermitteln. Vorzugsweise ist der zweite Sensor dazu eingerichtet, den Abstand des zweiten Sensors zu dem Erddamm auf Basis einer Laufzeitmessung zu ermitteln. Alternativ kann der erste Sensor dazu eingerichtet sein, den Abstand zu einem verdichteten Bodenstreifen und/oder eine aktuelle Ablagetiefe durch Erfassung und Auswertung der Auslenkung oder Verformung einer Andruckrolle der landwirtschaftlichen Arbeitsmaschine zu erfassen. Mittels einer geeigneten Berechnungsroutine kann die Auslenkung und/oder Verformung einer Andruckrolle in einen Bodenabstand und/oder eine Ablagetiefe umgerechnet werden.

Es ist ferner eine erfindungsgemäße landwirtschaftliche Arbeitsmaschine mit einer elektronischen Datenverarbeitungseinrichtung bevorzugt, wobei die Datenverarbeitungseinrichtung dazu eingerichtet ist, auf Grundlage von Sensordaten der Sensoranordnung den Einfluss einer Umverteilung des Erdmaterials der Erddämme zur Vergleichmäßigung des Bodenniveaus auf die Ablagetiefe und/oder die Erdbedeckungshöhe von vor der Umverteilung abgelegtem Ausbringmaterial zu ermitteln. Vorzugsweise ermittelt die Datenverarbeitungseinrichtung die aus der Umverteilung des Erdmaterials der Erddämme resultierende Ablagetiefe und/oder Erdbedeckungshöhe des Ausbringmaterials. Die Datenverarbeitungseinrichtung kann dazu eingerichtet sein, den Einfluss der Umverteilung des Erdmaterials der Erddämme auf die Ablagetiefe und/oder die Erdbedeckungshöhe anhand einer Berechnungsroutine zu berechnen und/oder anhand eines Datensatzes abzufragen.

In einer anderen Ausführungsform der erfindungsgemäßen landwirtschaftlichen Arbeitsmaschine ist die Datenverarbeitungseinrichtung dazu eingerichtet, den Einfluss der Umverteilung des Erdmaterials der Erddämme auf Grundlage eines Erdverteilungsmodells zu berechnen. Über die Messung von zwei verschiedenen Bodenebenen und einem mathematischen Modell, welches die Umverteilung des Erdmaterials widerspiegelt, wird die resultierende Ablagetiefe und oder Erdbedeckungshöhe des Ausbringmaterials berechnet. Die resultierende Ablagetiefe und/oder Erdbedeckungshöhe kann sich aus einer Furchentiefe welche die Umverteilung des Erddammmaterials nicht berücksichtigt, und einer Erdschichthöhe einer Erdschicht, welche durch die Umverteilung des Erddammmaterials entsteht, zusammensetzen. Durch das Berechnen des Einflusses der Umverteilung des Erdmaterials können beispielsweise Veränderungen im Säprozess aufgezeigt werden.

In einer weiteren bevorzugten Ausführungsform der erfindungsgemäßen landwirtschaftlichen Arbeitsmaschine ist die Datenverarbeitungseinrichtung dazu eingerichtet, eine Korrektur der Tiefenführung eines Furchenöffners zu veranlassen, mit welcher die durch die Umverteilung des Erdmaterials der Erddämme verursachte Änderung der Ablagetiefe und/oder Erdbedeckungshöhe reduziert oder ausgeglichen wird. Wenn die Umverteilung des Erdmaterials der Erddämme zu einer Erhöhung der Ablagetiefe und/oder Erdbedeckungshöhe um eine Erdschichthöhe führt, kann zur Korrektur der Tiefenführung des Furchenöffners eine um die Erdschichthöhe verringerte Furchentiefe am Furchenöffner eingestellt werden. Die sich ergebende Ablagetiefe beziehungsweise Erdbedeckungshöhe entspricht somit der Summe aus Furchentiefe und Erdschichthöhe, wobei die Erdschichthöhe der Schichtstärke der durch Umverteilung der Erddämme erzeugten Erdschicht entspricht.

In einer anderen bevorzugten Ausführungsform weist die erfindungsgemäße landwirtschaftliche Arbeitsmaschine zumindest einen in Fahrtrichtung hinter der Rückverfestigungswalze angeordneten Furchenöffner zum Erzeugen einer Ablagefurche für abzulegendes Ausbringmaterial in dem verdichteten Bodenstreifen auf. Alternativ oder zusätzlich kann die landwirtschaftliche Arbeitsmaschine zumindest eine in Fahrtrichtung hinter der Rückverfestigungswalze angeordnete Materialablageeinrichtung zum Ablegen von Ausbringmaterial in eine in dem verdichteten Bodenstreifen erzeugte Ablagefurche aufweisen. Der Furchenöffner kann als Scheibenschar, beispielsweise als Einscheibenschar oder als Doppelscheibenschar, ausgebildet sein. Der Furchenöffner kann als Zinkenschar ausgebildet sein. Der Furchenöffner weist eine Tiefenführungseinrichtung zur Tiefenführung des Furchenöffners auf. Die Materialablageeinrichtung kann ein Ablagekanal mit einer Ablageöffnung für das Ausbringmaterial sein. Die Ablageeinrichtung kann ferner einen Ablagekanal mit einer Ablageöffnung für das Ausbringmaterial umfassen. Die Ablageeinrichtung kann ein Schussrohr sein oder umfassen. Vorzugsweise ist die Tiefenführungseinrichtung so positioniert, dass diese sich auf einem verdichteten Bodenstreifen abstützt. Als Referenzebene für die Furchentiefe und somit die Ablagetiefe des Ausbringmaterials vor der Erddammmaterialumverteilung dient somit der verdichtete Bodenstreifen. Eine nachträgliche Verbringung des Erdmaterials der Erddämme auf die verdichteten Bodenstreifen, beispielsweise durch eine Materialumverteilung, führt zu einer Änderung der Ablagetiefe.

In einer weiteren bevorzugten Ausführungsform weist die erfindungsgemäße landwirtschaftliche Arbeitsmaschine eine in Fahrtrichtung hinter der Rückverfestigungswalze angeordnete Vergleichmäßigungseinrichtung auf, welche dazu eingerichtet ist, das Bodenniveau durch die Umverteilung von Erdmaterial der Erddämme zu vergleichmäßigen. Die Vergleichmäßigungseinrichtung kann einen oder mehrere Striegel umfassen. Die Vergleichmäßigungseinrichtung wird bei einer Bewegung der landwirtschaftlichen Arbeitsmaschine durch die Erddämme hindurchbewegt, sodass das Erdmaterial der Erddämme durch Abtragung umverteilt wird.

Es ist ferner eine erfindungsgemäße landwirtschaftliche Arbeitsmaschine bevorzugt, welche in Fahrtrichtung vor der Rückverfestigungswalze angeordnete Bodenbearbeitungswerkzeuge zu Bodenauflockerung aufweist. Die Bodenbearbeitungswerkzeuge können Scheiben oder Zinken sein. Die Bodenbearbeitungswerkzeuge werden bei einer Bewegung der landwirtschaftlichen Arbeitsmaschine durch den Boden hindurchbewegt. Der von den Bodenbearbeitungswerkzeugen aufgelockerte Boden wird dann mittels der in Fahrtrichtung hinter den Bodenbearbeitungswerkzeugen angeordneten Rückverfestigungswalze rückverfestigt.

In einer anderen bevorzugten Ausführungsform der erfindungsgemäßen landwirtschaftliche Arbeitsmaschine ist die Sensoranordnung dazu eingerichtet, beim Ermitteln des Abstands zwischen dem ersten Referenzpunkt und dem durch ein Walzensegment erzeugten verdichteten Bodenstreifen einen Bereich entlang der Laufspur eines Tiefenführungsrads einer Tiefenführungseinrichtung zur Tiefenführung eines Furchenöffners innerhalb des Bodenstreifens als Bodenreferenzpunkt zu berücksichtigen. Innerhalb der Laufspur des Tiefenführungsrads der Tiefenführungseinrichtung kann das Bodenniveau aufgrund einer Verdichtung durch das Tiefenführungsrad geringfügig herabgesetzt sein. Die Sensoranordnung kann ferner dazu eingerichtet sein, beim Ermitteln des Abstands zwischen dem ersten Referenzpunkt und dem durch ein Walzensegment erzeugten verdichteten Bodenstreifen einen Bereich außerhalb der Laufspur eines Tiefenführungsrads einer Tiefenführungseinrichtung zur Tiefenführung eines Furchenöffners innerhalb des Bodenstreifens als Bodenreferenzpunkt zu berücksichtigen. Ferner kann die Sensoranordnung dazu eingerichtet sein, beim Ermitteln des Abstands zwischen dem ersten Referenzpunkt und dem durch ein Walzensegment erzeugten verdichteten Bodenstreifen einen Bereich einer durch einen Furchenöffner geöffneten Ablagefurche für Ausbringmaterial innerhalb des Bodenstreifens als Bodenreferenzpunkt zu berücksichtigen.

Es ist darüber hinaus eine erfindungsgemäße landwirtschaftliche Arbeitsmaschine bevorzugt, bei welcher die Sensoranordnung mehrere voneinander beabstandete erste Sensoren aufweist, welche jeweils dazu eingerichtet sind, den Abstand zwischen einem, dem jeweiligen Sensor zugeordneten ersten Referenzpunkt und einem durch ein Walzensegment erzeugten und dem jeweiligen Sensor zugeordneten verdichteten Bodenstreifen zu ermitteln. Beispielsweise ist jedem verdichteten Bodenstreifen ein erster Sensor zugeordnet. Alternativ kann beispielsweise auch jedem zweiten, dritten oder vierten verdichteten Bodenstreifen ein erster Sensor zugeordnet sein. Alternativ oder zusätzlich kann die Sensoranordnung mehrere zweite Sensoren aufweisen, welche jeweils dazu eingerichtet sind, den Abstand zwischen einem, dem jeweiligen Sensor zugeordneten zweiten Referenzpunkt und einem durch benachbarte Walzensegmente erzeugten und dem jeweiligen Sensor zugeordneten Erddamm zwischen benachbarten verdichteten Bodenstreifen zu ermitteln. Beispielsweise ist jedem Erddamm ein zweiter Sensor zugeordnet. Alternativ kann beispielsweise auch jedem zweiten, dritten oder vierten Erddamm ein zweiter Sensor zugeordnet sein.

Die der Erfindung zugrundeliegende Aufgabe wird ferner durch ein Verfahren der eingangs genannten Art gelöst, wobei mittels der Sensoranordnung im Rahmen des erfindungsgemäßen Verfahrens der Abstand zwischen einem zweiten Referenzpunkt und einem durch benachbarte Walzensegmente erzeugten Erddamm zwischen benachbarten verdichteten Bodenstreifen ermittelt wird. Das erfindungsgemäße Verfahren wird vorzugsweise mit einer landwirtschaftlichen Arbeitsmaschine nach einer der vorstehend beschriebenen Ausführungsformen ausgeführt. Hinsichtlich der Vorteile und Modifikation des erfindungsgemäßen Verfahrens wird somit zunächst auf die Vorteile und Modifikation der erfindungsgemäßen landwirtschaftlichen Arbeitsmaschine verwiesen.

In einer bevorzugten Ausführungsform des erfindungsgemäßen Verfahrens wird der Einfluss einer Umverteilung des Erdmaterials der Erddämme zur Vergleichmäßigung des Bodenniveaus auf die Ablagetiefe und/oder die Erdbedeckungshöhe von vor der Umverteilung abgelegtem Ausbringmaterial auf Grundlage von Sensordaten der Sensoranordnung mittels einer Datenverarbeitungseinrichtung der landwirtschaftlichen Arbeitsmaschine ermittelt.

Die Datenverarbeitungseinrichtung kann den Einfluss der Umverteilung des Erdmaterials der Erddämme auf Grundlage eines Erdverteilungsmodells berechnen.

Nachfolgend werden bevorzugte Ausführungsformen der Erfindung unter Bezugnahme auf die beiliegenden Zeichnungen näher erläutert und beschrieben. Dabei zeigen:
- Fig. 1: eine erfindungsgemäße landwirtschaftliche Arbeitsmaschine in einer perspektivischen Darstellung;
- Fig. 2: unterschiedliche Bodenzustände während der Bearbeitung mit einer erfindungsgemäßen landwirtschaftlichen Arbeitsmaschine;
- Fig. 3: Querschnittsdarstellungen des Bodens zu den in der Fig. 2 abgebildeten Bodenzuständen; und
- Fig. 4: eine Tiefenführungseinrichtung einer erfindungsgemäßen landwirtschaftlichen Arbeitsmaschine.

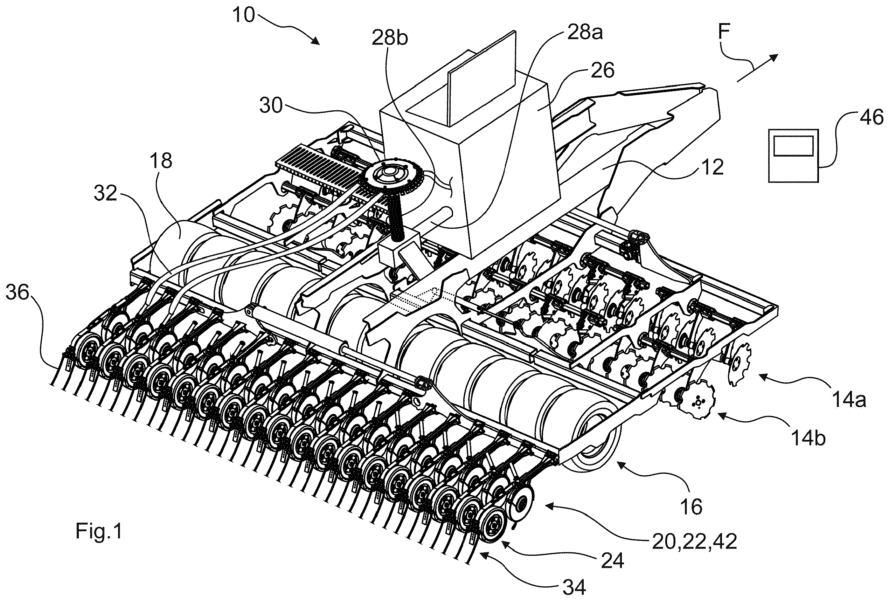

Die Fig. 1 zeigt eine landwirtschaftliche Arbeitsmaschine 10, welche als Sä- und Bodenbearbeitungsmaschine ausgebildet ist. Die Arbeitsmaschine 10 umfasst einen Maschinenrahmen 12, welcher über eine Deichsel an ein Zugfahrzeug, beispielsweise einen Traktor, anhängbar ist. In einem in Fahrtrichtung F vorderen Bereich der Arbeitsmaschine 10 befinden sich zwei Reihen an Bodenbearbeitungsfahrzeugen 14a, 14b. Die Bodenbearbeitungswerkzeuge 14a, 14b dienen zur Bodenauflockerung und sind vorliegend als schräg gestellte konturierte Scheiben ausgebildet. Alternativ oder zusätzlich zu den Scheiben können Zinken als Bodenbearbeitungswerkzeuge eingesetzt werden. Die Bodenbearbeitungswerkzeuge 14a, 14b werden durch das Erdreich bewegt und sorgen somit für einen Erdumwurf und eine Erdverkrümelung.

In Fahrtrichtung F hinter den Bodenbearbeitungswerkzeugen 14a, 14b befindet sich eine Rückverfestigungswalze 16. Der von den Bodenbearbeitungswerkzeugen 14a, 14b aufgelockerte Boden B wird mittels der Rückverfestigungswalze 16 rückverfestigt. Die Rückverfestigungswalze 16 weist mehreren quer zur Fahrtrichtung F nebeneinander angeordnete Walzensegmente 18 auf. Die Rückverfestigungswalze 16 ist in der dargestellten Ausführungsform als Packerwalze ausgebildet, sodass die Walzensegmente 18 Packerräder sind. Die als Packerräder ausgebildeten Walzensegmente 18 sind quer zur Fahrtrichtung F beabstandet voneinander angeordnet.

In Fahrtrichtung F hinter der Rückverfestigungswalze 16 befinden sich Furchenöffner 20 zum Erzeugen einer Ablagefurche für abzulegendes Ausbringmaterial. Die Furchenöffner 20 sind derart in Fahrtrichtung F hinter den Walzensegmenten 18 der Rückverfestigungswalze 16 angeordnet, dass die Ablagefurchen in den von den Walzensegmenten 18 erzeugten, verdichteten Bodenstreifen erzeugt werden. Die Furchenöffner 20 sind vorliegend als Doppelscheibenschare ausgebildet. In anderen Ausführungsformen können die Furchenöffner 20 auch als Einscheibenschare oder als Zinkenschare ausgebildet sein. Die Furchenöffner 20 sind quer zur Fahrtrichtung F nebeneinander und beabstandet voneinander angeordnet.

Unmittelbar an den Furchenöffnern 20 befinden sich Materialablageeinrichtungen 22 zum Ablegen des Ausbringmaterials in die von den Furchenöffnern 20 erzeugten Ablagefurchen. Die Materialablageeinrichtungen 22 können als Ablagekanäle mit einer Ablageöffnung für das Ausbringmaterial ausgebildet sein. Beispielsweise sind die Ablageeinrichtungen 22 Schussrohre, welche zwischen den Scheiben der als Doppelscheibenschar ausgebildeten Furchenöffner 20 angeordnet sind. Die Furchenöffner 20 sind mit einer Tiefenführungseinrichtung 42 zur Tiefenführung des jeweiligen Furchenöffners 20 ausgestattet. Über die Tiefenführungseinrichtungen 42 lässt sich die Furchentiefe der von den Furchenöffnern 20 erzeugten Ablagefurchen einstellen. Die Tiefenführungseinrichtungen 42 der Furchenöffner 20 sind so positioniert, dass diese sich auf einem verdichteten Bodenstreifen abstützen.

In Fahrtrichtung F hinter den Materialablageeinrichtungen 22 befinden sich Andrückrollen 24, welche dazu dienen, die erzeugten Ablagefurchen mit Erdmaterial zu füllen und das Erdmaterial im Furchenbereich anzudrücken.

Das über die Materialablageeinrichtungen 22 abgelegte Ausbringmaterial ist Saatgut. Das Saatgut wird in dem auf dem Maschinenrahmen 12 angeordneten Vorratsbehälter 26 mitgeführt. Vom Vorratsbehälter 26 gelangt das Saatgut durch pneumatische Förderung über die Förderleitungen 28a. 28b in eine Verteileinheit 30. Die Verteileinheit 30 ist als Verteilerkopf ausgebildet und über eine Vielzahl von Ausbringleitungen 32 mit den jeweiligen Materialablageeinrichtungen 22 verbunden. In der Darstellung sind aus Übersichtlichkeitsgründen lediglich zwei Ausbringleitungen 32 dargestellt. Zwischen den Ausbringleitungen 32 und den Materialablageeinrichtungen 22 können Konditioniereinrichtungen zum Konditionieren des Saatgut-Material-Stroms und/oder Dosiereinrichtungen zum Dosieren des über die Ablageeinrichtungen 22 abzulegenden Ausbringmaterials angeordnet sein.

In Fahrtrichtung F hinter den Andruckrollen 24 befindet sich eine Vergleichmäßigungseinrichtung 34. Die Vergleichmäßigungseinrichtung 34 dient zum Umverteilen von Erdmaterial, sodass das Bodenniveau entlang der Arbeitsbreite der Arbeitsmaschine 10 vergleichmäßigt wird. Die Vergleichmäßigungseinrichtung 34 weist mehrere quer zur Fahrtrichtung F nebeneinander und beabstandet voneinander angeordnete Striegel 36 auf.

Eine Vergleichmäßigung ist erforderlich, da sich durch Erdverdrängung der Walzensegmente 18 Erddämme zwischen den Walzensegmenten 18 bilden. Die Umverteilung des Erdmaterials der Erddämme durch die Vergleichmäßigungseinrichtung 34 zur Vergleichmäßigung des Bodenniveaus hat einen Einfluss auf die Ablagetiefe, da durch die Materialumverteilung eine weitere Erdschicht entsteht, deren Erdschichthöhe zu einer Vergrößerung der Erdbedeckungshöhe des Ausbringmaterials führt.

Die Arbeitsmaschine 10 umfasst ferner eine Datenverarbeitungseinrichtung 46, mittels welcher der Einfluss der Umverteilung des Erdmaterials der Erddämme durch die Vergleichmäßigungseinrichtung 34 auf die Ablagetiefe beziehungsweise die Erdbedeckungshöhe des Saatguts ermittelt werden kann. Die Datenverarbeitungseinrichtung 46 ist dazu eingerichtet den Einfluss der Umverteilung des Erdmaterials der Erddämme auf Grundlage eines Erdverteilungsmodells zu berechnen. Die Datenverarbeitungseinrichtung berechnet die aus der Umverteilung des Erdmaterials der Erddämme resultierende Ablagetiefe des Ausbringmaterials.

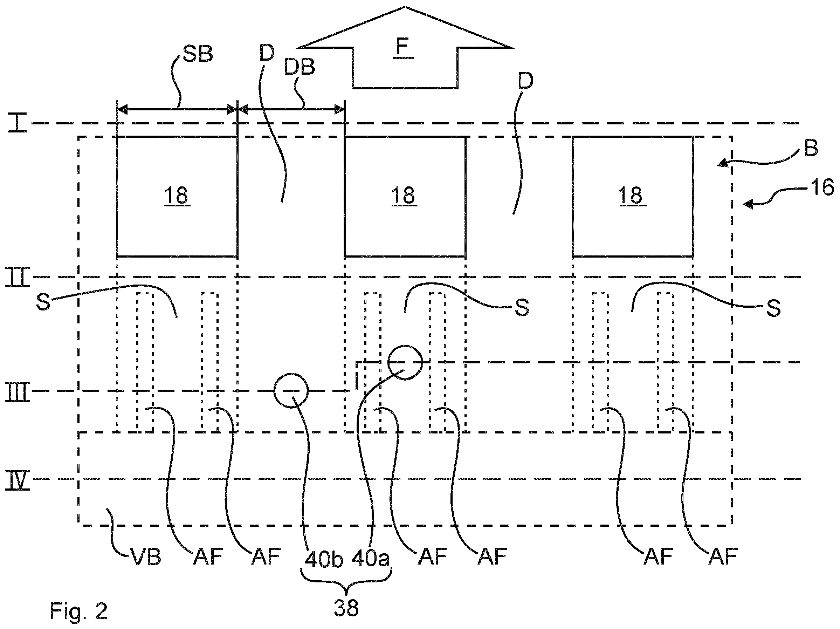

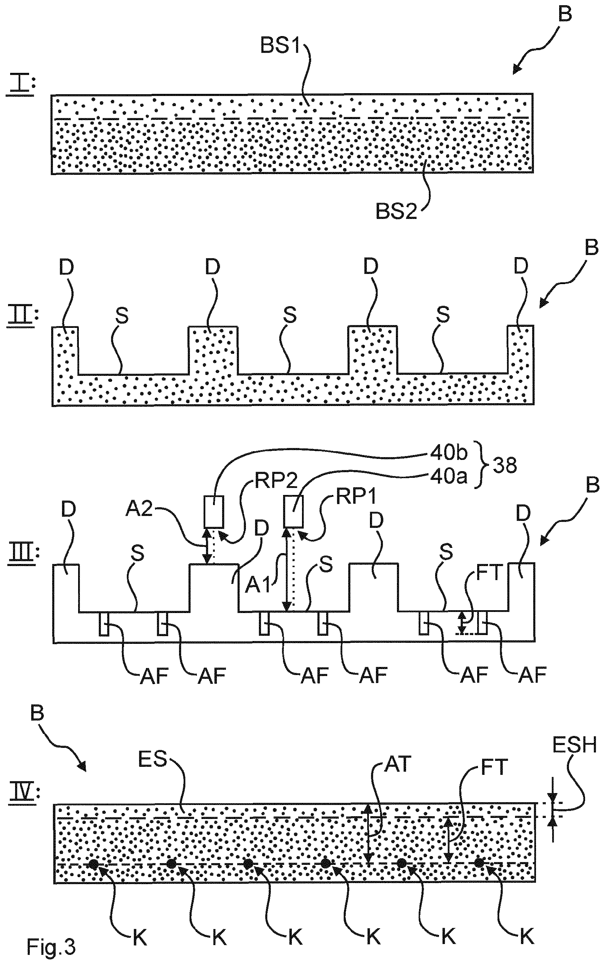

Die Fig. 2 zeigt unterschiedliche Zustände des Bodens B während der Bearbeitung mit der landwirtschaftlichen Arbeitsmaschine 10. In der Fig.2 sind vier Schnittebenen I bis IV gekennzeichnet, wobei die dazugehörigen Erdquerschnitte in der Fig.3 dargestellt sind.

Die Fig. 2 zeigt eine Rückverfestigungswalze 16 mit mehreren quer zur Fahrtrichtung F nebeneinander und beabstandet voneinander angeordneten Walzensegmenten 18. Die Walzensegmente 18 erzeugen durch Abrollen auf dem Boden der landwirtschaftlichen Nutzfläche verdichtete Bodenstreifen S. Ferner kommt es durch die Walzensegmente 18 zu einer seitlichen Erdverdrängung, sodass sich zwischen benachbarten verdichteten Bodenstreifen S jeweils ein Erddamm D bildet. Die verdichteten Bodenstreifen S weisen eine Streifenbreite SB auf. Die Streifenbreite SB entspricht im Wesentlichen der Breite der Walzensegmente 18. Die Erddämme D zwischen den verdichteten Bodenstreifen S weisen eine Dammbreite DB auf, wobei die Dammbreite DB im Wesentlichen dem Abstand zwischen benachbarten Walzensegmenten 18 entspricht.

In Zusammenschau mit der Fig. 3 ergibt sich, dass der Boden B vor der Überfahrt der Rückverfestigungswalze 16 zwei Bodenschichten BS1 BS2 aufweist. Die untere Bodenschicht BS2 ist eine nicht aufgelockerte Bodenschicht. Die obere Bodenschicht BS1 wurde durch Bearbeitungswerkzeuge 14a, 14b der Arbeitsmaschine 10 aufgelockert (vgl. Bodenquerschnitt I).

Wie der Bodenquerschnitt II zeigt, entstehen durch die Überfahrt der Rückverfestigungswalze 16 verdichtete Bodenstreifen S und Erddämme D zwischen den verdichteten Bodenstreifen S.

Wie in dem Bodenquerschnitt III dargestellt, werden dann entlang der verdichteten Bodenstreifen S Ablagefurchen AF in den Boden B eingebracht. Die Ablagefurchen AF weisen eine Furchentiefe FT auf, wobei die Furchentiefe FT über das Einstellen einer Tiefenführungseinrichtung 42 einstellbar ist.

Die landwirtschaftliche Arbeitsmaschine 10 umfasst eine Sensoranordnung 38 mit einem ersten Sensor 40a und einem zweiten Sensor 40b. Mittels des ersten Sensors 40a wird der Höhenabstand A1 zwischen einem ersten Referenzpunkt RP1 und einem verdichteten Bodenstreifen S ermittelt. Der erste Referenzpunkt RP1 entspricht in diesem Fall der Position des ersten Sensors 40a. Der zweite Sensor ermittelt den Höhenabstand A2 zwischen einem zweiten Referenzpunkt RP2 und einem durch benachbarte Walzensegmente 18 erzeugten Erddamm D zwischen benachbarten verdichteten Bodenstreifen S. Der zweite Referenzpunkt RP2 entspricht der Position des zweiten Sensors 40b. Der erste Sensor 40a ist also so angeordnet, dass dieser sich innerhalb der Fahrspur eines Walzensegments 18 befindet. Der zweite Sensor 40b ist so angeordnet, dass er sich zwischen den Fahrspuren von benachbarten Walzensegmenten 18 befindet. Die Sensoren 40a, 40b sind jeweils berührungslos arbeitende Abstandssensoren. Der erste Sensor 40a ermittelt den Abstand A1 des ersten Sensors 40a zu dem verdichteten Bodenstreifen S auf Basis einer Laufzeitmessung. Ferner ermittelt der zweite Sensor 40b den Abstand A2 des zweiten Sensors 40b zu dem Erddamm D auf Basis einer Laufzeitmessung.

Die Sensoren 40a, 40b der Sensoranordnung 38 sind mit einer Datenverarbeitungseinrichtung 46 verbunden. Die Datenverarbeitungseinrichtung 46 ermittelt auf Grundlage der Sensordaten der Sensoranordnung 38 den Einfluss einer Umverteilung des Erdmaterials der Erddämme D zur Vergleichmäßigung des Bodenniveaus auf die Ablagetiefe AT des Ausbringmaterials, also der Saatkörner K, welche in die Ablagefurchen AF abgelegt werden. Hierzu nutzt die Datenverarbeitungseinrichtung 46 ein Erdverteilungsmodell. Über die Messung von zwei verschiedenen Bodenebenen und einem mathematischen Modell, welches die Umverteilung des Erdmaterials widerspiegelt, kann die sich ergebene Ablagetiefe AT berechnet werden.

Der Bodenquerschnitt IV bezieht sich auf den vergleichmäßigten Bereich VB, in welchem eine Vergleichmäßigung durch die Vergleichmäßigungseinrichtung 34 stattgefunden hat. Die Ablagetiefe AT setzt sich in diesem Bereich aus der Furchentiefe FT und der Erdschichthöhe ESH der durch die Umverteilung des Erdmaterials der Erddämme D entstandenen Erdschicht ES zusammen.

Die Datenverarbeitungseinrichtung 46 kann eine Korrektur der Tiefenführung eines Furchenöffners 20 veranlassen, mit welcher die durch die Umverteilung des Erdmaterials der Erddämme D verursachte Änderung der Ablagetiefe AT reduziert oder ausgeglichen wird.

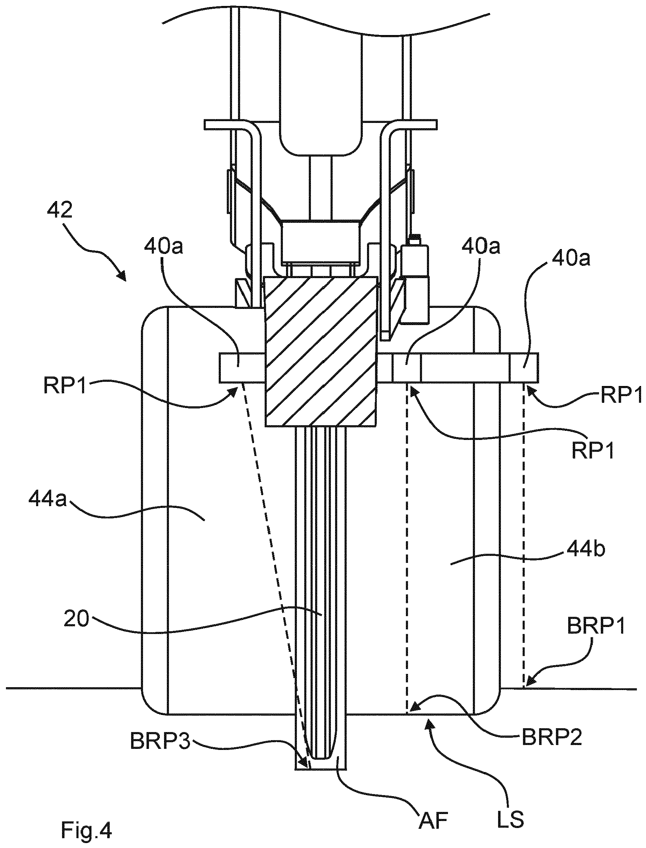

Die Fig. 4 zeigt drei mögliche Anordnungen und Ausrichtungen des ersten Sensors 40a der Sensoranordnung 38 einer Arbeitsmaschine 10.

Beispielsweise kann der erste Sensor 40a derart angeordnet und ausgerichtet sein, dass dieser den Abstand A1 zwischen dem Sensor 40a und einem Bodenreferenzpunkt BRP1 ermittelt, wobei der Bodenreferenzpunkt BRP1 außerhalb der Laufspur LS eines Tiefenführungsrads 44a, 44b einer Tiefenführungseinrichtung 42 zur Tiefenführung eines Furchenöffners 20 liegt.

Alternativ kann der Sensor 40a derart angeordnet und ausgerichtet sein, dass dieser den Abstand zwischen dem Sensor 40a und einem Bodenreferenzpunkt BRP2 ermittelt, welcher in der Laufspur LS eines Tiefenführungsrads 44a, 44b der Tiefenführungseinrichtung 45 liegt.

Alternativ kann der erste Sensor 40a derart angeordnet und ausgerichtet sein, dass dieser den Abstand zu einem Bodenreferenzpunkt BRP3 ermittelt, welcher sich auf dem Grund der Ablagefurche AF befindet.

### Bezugszeichen

- 10: Arbeitsmaschine
- 12: Maschinenrahmen
- 14a, 14b: Bodenbearbeitungswerkzeuge
- 16: Rückverfestigungswalze
- 18: Walzensegmente
- 20: Furchenöffner
- 22: Materialablageeinrichtung
- 24: Andrückrollen
- 26: Vorratsbehälter
- 28a, 28b: Förderleitungen
- 30: Verteileinheit
- 32: Ausbringleitungen
- 34: Vergleichmäßigungseinrichtung
- 36: Striegel
- 38: Sensoranordnung
- 40a, 40b: Sensoren
- 42: Tiefenführungseinrichtung
- 44a, 44b: Tiefenführungsräder
- 46: Datenverarbeitungseinrichtung

- AF: Ablagefurchen
- AT: Ablagetiefe
- A1, A2: Abstände
- B: Boden
- BS1, BS2: Bodenschichten (aufgelockert, nicht aufgelockert)
- BRP1-BRP3: Bodenreferenzpunkte
- D: Erddämme
- DB: Dammbreite
- ES: Erdschicht
- ESH: Erdschichthöhe
- F: Fahrtrichtung
- FT: Furchentiefe
- K: Saatkörner
- LS: Laufspur
- RP1, RP2: Referenzpunkte
- S: Bodenstreifen
- SB: Streifenbreite
- VB: vergleichmäßigter Bereich

- I-IV: Schnittebenen

## Patentansprüche

1. Landwirtschaftliche Arbeitsmaschine (10), insbesondere Sä- und Bodenbearbeitungsmaschine, mit
- einer Rückverfestigungswalze (16), welche mehrere nebeneinander angeordnete Walzensegmente (18) umfasst, wobei mittels der Walzensegmente (18) verdichtete Bodenstreifen (S) derart erzeugbar sind, dass sich durch Erdverdrängung der Walzensegmente (18) zwischen benachbarten verdichteten Bodenstreifen (S) jeweils ein Erddamm (D) bildet; und
- einer Sensoranordnung (38), mittels welcher der Abstand (A1) zwischen einem ersten Referenzpunkt (RP1) und einem durch ein Walzensegment (18) erzeugten verdichteten Bodenstreifen (S) ermittelbar ist;
**dadurch gekennzeichnet, dass** mittels der Sensoranordnung (38) der Abstand (A2) zwischen einem zweiten Referenzpunkt (RP2) und einem durch benachbarte Walzensegmente (18) erzeugten Erddamm (D) zwischen benachbarten verdichteten Bodenstreifen (S) ermittelbar ist.

2. Landwirtschaftliche Arbeitsmaschine (10) nach Anspruch 1,
**dadurch gekennzeichnet, dass**
- sich der erste Referenzpunkt (RP1) in Fahrtrichtung (F) hinter einem Walzensegment (18) befindet; und/oder
- sich der zweite Referenzpunkt (RP2) zwischen zwei benachbarten Walzensegmenten 18 befindet.

3. Landwirtschaftliche Arbeitsmaschine (10) nach Anspruch 1 oder 2,
**dadurch gekennzeichnet, dass** die Sensoranordnung (38)
- zumindest einen ersten Sensor (40a) aufweist, welcher dazu eingerichtet ist, den Abstand (A1) zwischen dem ersten Referenzpunkt (RP1) und dem durch das Walzensegment (18) erzeugten verdichteten Bodenstreifen (S) zu ermitteln; und/oder
- zumindest einen zweiten Sensor (40b) aufweist, welcher dazu eingerichtet ist, den Abstand (A2) zwischen dem zweiten Referenzpunkt (RP2) und dem durch benachbarte Walzensegmente (18) erzeugten Erddamm (D) zwischen benachbarten verdichteten Bodenstreifen (S) zu ermitteln.

4. Landwirtschaftliche Arbeitsmaschine (10) nach Anspruch 3,
**dadurch gekennzeichnet, dass** der erste Sensor (40a) und/oder der zweite Sensor (40b) jeweils als berührungslos arbeitender Abstandssensor ausgebildet ist.

5. Landwirtschaftliche Arbeitsmaschine (10) nach einem der vorstehenden Ansprüche,
**gekennzeichnet durch** eine Datenverarbeitungseinrichtung (46), welche dazu eingerichtet ist, auf Grundlage von Sensordaten der Sensoranordnung (38) den Einfluss einer Umverteilung des Erdmaterials der Erddämme (D) zur Vergleichmäßigung des Bodenniveaus auf die Ablagetiefe (AT) und/oder die Erdbedeckungshöhe von vor der Umverteilung abgelegtem Ausbringmaterial (K) zu ermitteln.

6. Landwirtschaftliche Arbeitsmaschine (10) nach Anspruch 5,
**dadurch gekennzeichnet, dass** die Datenverarbeitungseinrichtung (46) dazu eingerichtet ist, den Einfluss der Umverteilung des Erdmaterials der Erddämme (D) auf Grundlage eines Erdverteilungsmodells zu berechnen.

7. Landwirtschaftliche Arbeitsmaschine (10) nach Anspruch 5 oder 6,
**dadurch gekennzeichnet, dass** die Datenverarbeitungseinrichtung (46) dazu eingerichtet ist, eine Korrektur der Tiefenführung eines Furchenöffners (20) zu veranlassen, mit welcher die durch die Umverteilung des Erdmaterials der Erddämme (D) verursachte Änderung der Ablagetiefe (AT) und/oder Erdbedeckungshöhe reduziert oder ausgeglichen wird.

8. Landwirtschaftliche Arbeitsmaschine (10) nach einem der vorstehenden Ansprüche,
**gekennzeichnet durch**
- zumindest einen in Fahrtrichtung (F) hinter der Rückverfestigungswalze (16) angeordneten Furchenöffner (20) zum Erzeugen einer Ablagefurche (AF) für abzulegendes Ausbringmaterial (K) in dem verdichteten Bodenstreifen (S); und/oder
- zumindest einer in Fahrtrichtung (F) hinter der Rückverfestigungswalze (16) angeordneten Materialablageeinrichtung (22) zum Ablegen von Ausbringmaterial (K) in eine in dem verdichteten Bodenstreifen (S) erzeugte Ablagefurche (AF).

9. Landwirtschaftliche Arbeitsmaschine (10) nach einem der vorstehenden Ansprüche,
**gekennzeichnet durch** eine in Fahrtrichtung (F) hinter der Rückverfestigungswalze (16) angeordnete Vergleichmäßigungseinrichtung (34), welche dazu eingerichtet ist, das Bodenniveau durch Umverteilung von Erdmaterial der Erddämme (D) zu vergleichmäßigen.

10. Landwirtschaftliche Arbeitsmaschine (10) nach einem der vorstehenden Ansprüche,
**gekennzeichnet durch** in Fahrtrichtung (F) vor der Rückverfestigungswalze (16) angeordnete Bodenbearbeitungswerkzeuge (14a ,14b) zur Bodenauflockerung.

11. Landwirtschaftliche Arbeitsmaschine (10) nach einem der vorstehenden Ansprüche,
**dadurch gekennzeichnet, dass** die Sensoranordnung (38) dazu eingerichtet ist, beim Ermitteln des Abstands (A1) zwischen dem ersten Referenzpunkt (RP1) und dem durch ein Walzensegment (18) erzeugten verdichteten Bodenstreifen (S) einen der folgenden Bereiche innerhalb des Bodenstreifens (S) als Bodenreferenzpunkt (BRP1-BRP3) zu berücksichtigen:
- einen Bereich entlang der Laufspur (LS) eines Tiefenführungsrads (44a, 44b) einer Tiefenführungseinrichtung (42) zur Tiefenführung eines Furchenöffners (20);
- einen Bereich außerhalb der Laufspur (LS) eines Tiefenführungsrads (44a, 44b) einer Tiefenführungseinrichtung (42) zur Tiefenführung eines Furchenöffners (20);
- einen Bereich einer durch einen Furchenöffner (20) geöffneten Ablagefurche (AF) für Ausbringmaterial (K).

12. Landwirtschaftliche Arbeitsmaschine (10) nach einem der vorstehenden Ansprüche,
**dadurch gekennzeichnet, dass** die Sensoranordnung (38)
- mehrere voneinander beabstandete erste Sensoren (40a) aufweist, welche jeweils dazu eingerichtet sind, den Abstand (A1) zwischen einem dem jeweiligen Sensor (40a) zugeordneten ersten Referenzpunkt (RP1) und einem durch ein Walzensegment (18) erzeugten und dem jeweiligen Sensor (40a) zugeordneten verdichteten Bodenstreifen (S) zu ermitteln; und/oder
- mehrere zweite Sensoren (40b) aufweist, welche jeweils dazu eingerichtet sind, den Abstand (A2) zwischen einem dem jeweiligen Sensor (40b) zugeordneten zweiten Referenzpunkt (RP2) und einem durch benachbarte Walzensegmente (18) erzeugten und dem jeweiligen Sensor (40b) zugeordneten Erddamm (D) zwischen benachbarten verdichteten Bodenstreifen (S) zu ermitteln.

13. Verfahren zum Bearbeiten einer landwirtschaftlichen Nutzfläche mittels einer landwirtschaftliche Arbeitsmaschine (10), insbesondere einer landwirtschaftlichen Arbeitsmaschine (10) nach einem der vorstehenden Ansprüche, mit den Schritten:
- Erzeugen von verdichteten Bodenstreifen (S) mittels mehrerer nebeneinander angeordneter Walzensegmente (18) einer Rückverfestigungswalze (16) der landwirtschaftlichen Arbeitsmaschine (10) derart, dass sich durch Erdverdrängung der Walzensegmente (18) zwischen benachbarten verdichteten Bodenstreifen (S) jeweils ein Erddamm (D) bildet; und
- Ermitteln des Abstands (A1) zwischen einem ersten Referenzpunkt (RP1) und einem durch ein Walzensegment (18) erzeugten verdichteten Bodenstreifen (S) mittels einer Sensoranordnung (38) der landwirtschaftlichen Arbeitsmaschine (10);
**dadurch gekennzeichnet, dass** mittels der Sensoranordnung (38) der Abstand (A2) zwischen einem zweiten Referenzpunkt (RP2) und einem durch benachbarte Walzensegmente (18) erzeugten Erddamm (D) zwischen benachbarten verdichteten Bodenstreifen (S) ermittelt wird.

14. Verfahren nach Anspruch 13,
**gekennzeichnet durch** den Schritt:
- Ermitteln des Einflusses einer Umverteilung des Erdmaterials der Erddämme (D) zur Vergleichmäßigung des Bodenniveaus auf die Ablagetiefe (AT) und/oder die Erdbedeckungshöhe von vor der Umverteilung abgelegtem Ausbringmaterial (K) auf Grundlage von Sensordaten der Sensoranordnung (38) mittels einer Datenverarbeitungseinrichtung (46) der landwirtschaftlichen Arbeitsmaschine (10);
wobei die Datenverarbeitungseinrichtung (46) den Einfluss der Umverteilung des Erdmaterials der Erddämme (D) vorzugsweise auf Grundlage eines Erdverteilungsmodells berechnet.
